# EUROPÄISCHE PATENTSCHRIFT

(11) **EP 1 499 417 B1**
(45) Veröffentlichungstag und Bekanntmachung des Hinweises auf die Patenterteilung: **01.02.2006**
(21) Anmeldenummer: 03747438.4
(22) Anmeldetag: 30.04.2003
(51) Int. Cl.: B01D 46/00

(54) **ABGASFILTER ZUM BESEITIGEN VON IM ABGASSTROM EINER BRENNKRAFTMASCHINE ENTHALTENEN PARTIKELN**
EXHAUST GAS FILTER FOR ELIMINATING PARTICLES CONTAINED IN THE EXHAUST GAS STREAM OF AN INTERNAL COMBUSTION ENGINE
FILTRE A PARTICULES DE GAZ D'ECHAPPEMENT SERVANT A ELIMINER LES PARTICULES CONTENUS DANS LE FLUX DE GAZ D'ECHAPPEMENT D'UN MOTEUR A COMBUSTION INTERNE

(30) Priorität: 02.05.2002 DE 10219415
(43) Veröffentlichungstag der Anmeldung: 26.01.2005
(73) Patentinhaber: HJS Fahrzeugtechnik GmbH & Co. KG, 58706 Menden (DE)
(72) Erfinder: KRAFT, Franz, 59757 Arnsberg (DE)
(74) Vertreter: Haverkamp, Jens
(86) Internationale Anmeldenummer: PCT/EP2003/004511
(87) Internationale Veröffentlichungsnummer: WO 2003/092857

(56) Entgegenhaltungen:
- DE-A- 19 530 749
- US-A- 4 925 561
- PATENT ABSTRACTS OF JAPAN Bd. 1995, Nr. 08, 29. September 1995 (1995-09-29) & JP 7 139333 A (MITSUBISHI MOTORS CORP), 30. Mai 1995 (1995-05-30)

## Beschreibung

Die Erfindung betrifft einen Abgaspartikelfilter zum Beseitigen von in dem Abgasstrom einer Brennkraftmaschine, etwa einer Dieselbrennkraftmaschine enthaltenen Partikeln, dessen Filterkörper aus benachbart zueinander angeordneten, anströmseitig offenen und sich in Längserstreckung des Filterkörpers keilförmig verjüngenden Filtertaschen gebildet ist, wobei jede Filtertasche mit ihrer in Hauptströmungsrichtung des Abgases angeströmten Stirnseite die Querschnittsfläche des Filterkörpers querend angeordnet ist, wobei die den Filterkörperquerschnitt querenden Wandabschnitte der Filtertaschen parallel zueinander verlaufend angeordnet sind.

In dem Abgasstrang von Brennkraftmaschinen, vor allem von Dieselmotoren, sind Abgaspartikelfilter eingebaut, durch den der Abgasstrom zur Reduzierung einer Partikelemission geführt wird. Die Abgaspartikelfilter dienen bei Dieselmotoren vor allem zum Beseitigen von in dem Abgasstrom enthaltenen Rußpartikeln. Zum Entfemen der sich über die Zeit auf der Filteroberfläche ablagemden Rußpartikel werden die Filter durch Erzeugen eines Rußabbrandes regeneriert. Die Filter, insbesondere die Filterkörper, müssen daher nicht nur den Temperaturen des Abgasstromes sondern auch den bei einem Rußabbrand entstehenden Temperaturen standhalten. Dieselpartikelfilter werden für sich alleine oder auch im Rahmen eines zur Reinigung des Abgasstromes konzipierten CRT-Systems oder eines SCRT-Systems eingesetzt.

Ein aus DE 101 28 936 A1 bekannter, diesen Anforderungen genügender, als Dieselpartikelfilter eingesetzter Abgaspartikelfilter ist als rohrförmiger Filter aufgebaut und umfaßt einen Filterkörper, der aus einer Vielzahl die Längserstreckung des Filterkörpers bestimmender Filtertaschen gebildet ist. Die Filtertaschen sind radial zur Längsachse des Filters bzw. des Filterkörpers angeordnet. Die anströmseitig offenen Filtertaschenzwischenräume sind in Richtung der Längsachse des Filterkörpers keilförmig verjüngt. Infolge der radialen Anordnung der einzelnen Filtertaschen zueinander verjüngt sich die Querschnittsfläche in radialer Richtung jeder einzelnen Filtertasche von außen nach innen. Jede Filtertasche ist somit in zwei Richtungen - in Längserstreckung des Filterkörpers und in radialer Richtung von außen nach innen - keilförmig verjüngt. Gehalten sind die einzelnen radial zur Längsachse des Filterkörpers angeordneten Filtertaschen an einem zentralen, axial verlaufenden Stützrohr und außenseitig an einem Haltering.

Als Material zum Ausbilden der Filtertaschen wird üblicherweise ein Filtermaterial eingesetzt, das einen Träger aus Metall mit Öffnungen umfaßt, wobei in den Öffnungen ein Sintermaterial eingebracht ist. Das Trägermaterial kann beispielsweise ein Drahtgewebe sein und ist umformbar und schweißbar. Zur Ausbildung einer Filtertasche aus einem solchen Filtermaterial wird zunächst jede Filtertasche aus einem eigenen Filtermaterialzuschnitt gekantet. Anschließend werden die Stirnseite und die verjüngte Längsseite der Filtertasche durch einen Schweißprozeß verschlossen. Zur Ausbildung des Filterkörpers selbst werden zahlreiche derartiger individueller vorkonfektionierter Filtertaschen radial zur Längsachse des Filters angeordnet, wobei die querseitige Verjüngung zur Längsachse des Filterkörpers weist. Die verjüngten und geschlossenen stirnseitigen Enden der Filtertaschen sind in Anströmrichtung weisend angeordnet. Im Bereich der abströmseitigen Stimfläche sind zwei benachbart zueinander angeordnete Filtertaschen jeweils durch radial verlaufende Schweißnähte verbunden, die auch der Abdichtung der Abströmseite gegenüber der Anströmseite dienen. Die anströmseitig offenen, und ebenfalls in Längsrichtung des Filterkörpers sowie in radialer Richtung von außen nach innen sich keilförmig verjüngenden Filtertaschen sind somit durch die Zwischenräume zwischen jeweils zwei zuvor einzetn gefertigten abströmseitig offenen Filtertaschen gebildet.

Auch wenn grundsätzlich ein solcher Abgaspartikelfilter als Dieselpartikelfilter den gewünschten Anforderungen genügt, ist seine Herstellung aufwendig. Insbesondere ist es erforderlich, dass bei Realisierung eines Filterkörpers mit einer von einer kreisrunden Querschnittsform abweichenden Querschnittsfläche, unterschiedlich bezüglich ihrer radialen Erstrekkung dimensionierte Filtertaschen individuell bereitgestellt werden müssen. Zur Ausbildung des Filterkörpers müssen zahlreiche Schweißungen vorgenommen werden. Zum einen müssen die Stirnseiten und die Längsseiten zur Ausbildung jeder einzelnen Tasche durch Fügen verschlossen werden. Ferner ist es notwendig, die durch die benachbarte Anordnung zweier zuvor erstellter Filtertaschen anströmseitig offenen Filtertaschenzwischenräume an ihrem unteren Abschluß durch Fügen benachbarter Filtertaschenwände im Wege eines Schweißvorganges zu verschließen. Darüber hinaus ist festzustellen, daß infolge der radialen Anordnung der einzelnen Filtertaschen zur Längsachse des Filterkörpers sich im Zentrum des Filterkörpers ein für die Durchführung der Filterung nicht wirksamer axialer Bereich befindet, gebildet durch das Stützrohr sowie durch die inneren verjüngten Bereiche der Filtertaschen. Der axiale Bereich des Filterkörpers muß zudem durch eine an der abströmseitigen Stimfläche des Filterkörpers aufgeschweißte Dichtscheibe verschlossen sein.

Aus DE 199 24 584 A1 ist ein weiterer Abgaspartikelfilter bekannt. Die anströmseitig offenen Filtertaschen des in diesem Dokument beschriebenen Abgaspartikelfilters verjüngen sich wie auch bei dem zuvor beschriebenen Abgaspartikelfilter ebenfalls in Strömungsrichtung. Ein Element zur Ausbildung eines Filterkörpers eines solchen Abgaspartikelfilters besteht entsprechend Figur 2 dieses Dokumentes aus einer anströmseitig offenen Filtertasche und einer benachbarten abströmseitig offenen Filtertasche. Beide Filtertaschen sind durch einen perforierten Bandabschnitt getrennt. Diese Anordnung wird aus einer Metallfolie gebildet, die zur Ausbildung der beiden Taschen Z-förmig gefaltet ist, wobei die Faltachsen quer zur Längserstreckung des Filterkörpers verlaufen. Zum Ausbilden eines Filterkörpers werden zahlreiche dieser einzelnen Elemente miteinander gestapelt.

Grundsätzlich stellen sich bei dem aus diesem Dokument bekannten Abgaspartikelfilter dieselben Nachteile ein, die auch bereits zu DE 101 28 936 A1 beschrieben sind, wobei beim Gegenstand DE 199 24 584 A1 ferner Sorge für eine seitliche Abdichtung der Filtertaschen getragen werden muß.

Ausgehend von diesem diskutierten Stand der Technik liegt der Erfindung daher die Aufgabe zugrunde, einen eingangs genannten gattungsgemäßen Abgaspartikelfilter dergestalt weiterzubilden, dass insbesondere eine Herstellung auch unterschiedlicher Filterquerschnittsformen vereinfacht ist.

Diese Aufgabe wird erfindungsgemäß durch Anspruch 1 gelöst.

Bei dem beanspruchten Abgaspartikelfilter ist jede Filtertasche bezüglich der Querschnittsfläche des Filterkörpers so ausgebildet, dass diese die durch die Kontur des Filterkörpers vorgegebene Querschnittsfläche quert. Unter dem im Rahmen dieser Ausführungen benutzten Begriff "Queren der Querschnittsfläche" ist jedwede Filtertaschenerstreckung zu verstehen, die sich von einem Rand des Filterkörpers zu einem anderen Rand erstreckt. Die einzelnen Filtertaschen weisen jeweils parallel zueinander verlaufende Wandabschnitte, zumindest in ihren die Querschnittsfläche des Filterkörpers erstreckenden Abschnitten auf. Infolge dieser Ausbildung der Filtertaschen ist auch in den axialen Bereichen eine wirksame Filterung möglich. Dieser Abgaspartikelfilter wird aus einem einzigen kantbaren Filtermaterialstreifen hergestellt, und zwar unabhängig von der Querschnittskontur des aus einem solchen Filtermaterialstreifen zu erstellenden Filterkörpers. Die Ausbildung der Filtertaschen aus einem einzigen Filtermaterialstreifen, wobei die Breite des Filtermaterialstreifens der Längserstreckung des Filterkörpers entspricht, erfolgt durch Kanten des Filtermaterialstreifens an Kantachsen, die jeweils geringfügig gegenüber der Längsachse des Filterkörpers geneigt verlaufen. Zwei eine Filtertasche einschließende und die Filterquerschnittsfläche querende Wandabschnitte sind in dem Materialstreifen jeweils getrennt durch einen Seitenwandabschnitt. Die Kantachse zwischen einem solchen Seitenwandabschnitt und dem zuvor beschriebenen Wandabschnitt ist geneigt zur Ausbildung der sich keilförmig verjüngenden Filtertaschen. Daher sind die Kantachsen zum Begrenzen eines Seitenwandabschnittes durch zwei zueinander geneigt angeordnete Kantachsen begrenzt. Die Verjüngungsrichtung dieser Seitenwandabschnitte ist wechselweise in Hauptströmungsrichtung des Abgases und entgegengesetzt vorgesehen. Das zur Erstellung des Filterkörpers unter Ausbildung der einzelnen Taschen gekantete Filtermaterial braucht anschließend lediglich im Bereich der stirnseitig verjüngten Enden der Filtertaschen miteinander gefügt, beispielsweise verschweißt zu werden.

Ein weiterer Vorteil des beschriebenen Abgaspartikelfilters liegt darin, dass bei diesem Filter mit einfachen Mitteln eine Trennung der Anströmseite von der abströmseitigen Reinseite möglich ist. Benötigt wird zur Abdichtung der Schmutzseite von der Reinseite lediglich eine sich über die anströmseitige Mantelfläche des Filterkörpers erstreckende Schale, beispielsweise ausgebildet als Gehäuseschale, und ein Dichtflansch. Der Dichtflansch ist zweckmäßigerweise im Bereich der abströmseitigen Stirnfläche angeordnet und abgedichtet mit den Filtertaschen in denjenigen Umfangsbereichen verbunden, die der Schale umfänglich gegenüberliegen. Die Kontur der Querschnittsfläche der Filtertaschen ist bevorzugt viereckig, insbesondere rechteckig.

Nachfolgend ist die Erfindung anhand von Ausführungsbeispielen unter Bezugnahme auf die beigefügten Figuren beschrieben. Es zeigen:
- **Fig. 1**: Eine schematisierte dreidimensionale Ansicht auf die abströmseitige Stirnfläche eines als Dieselpartikelfilter eingesetzten Abgaspartikelfilters,
- **Fig. 2**: eine Darstellung entsprechend Figur 1 mit Blickwinkel auf die anströmseitige Stirnfläche des Dieselpartikelfilters,
- **Fig. 3**: eine vergrößerte Draufsicht auf die stirnseitige Anströmfläche des Filterkörpers des Dieselpartikelfilters der Figuren 1 und 2,
- **Fig. 4**: einen Schnitt durch den Dieselpartikelfilter der Figur 1 in seiner horizontalen Mittellängsebene,
- **Fig. 5**: einen Abschnitt eines Filtermaterialstreifens zum Erstellen des Filterkörpers der vorangegangenen Figuren und
- **Fig. 6**: eine schematisierte Ansicht eines weiteren Filterkörpers für einen Dieselpartikelfilter mit einer rechteckigen anströmseitigen Querschnittsfläche.

Ein insgesamt mit den Bezugszeichen 1 bezeichneter Dieselpartikelfilter umfaßt einen Filterkörper 2, der aus einem einzigen Filtermaterialstreifen hergestellt ist. Die Querschnittsfläche des Filterkörpers 2 ist etwa kreisrund. Der Dieselpartikelfilter 1 umfaßt neben dem Filterkörper 2 eine Gehäuseschale 3 und einen Dicht- und Montageflansch 4. Der Dicht- und Montageflansch 4 schließt bei dem dargestellten Ausführungsbeispiel die ausströmseitige Filterquerschnittsfläche 5 ein. Die Hauptströmungsrichtung des in einem nicht näher dargestellten Abgasstrang eines Dieselmotors eingesetzten Dieselpartikelfilters 1 ist mit dem die Abgasströmung symbolisiert darstellenden Pfeil 6 gekennzeichnet.

Der Filterkörper 2 ist gebildet aus wechselweise offenen und geschlossenen Filtertaschen F_{o ab}, F_{g ab}, wobei sich die abströmseitig offenen Filtertaschen F_{o ab} entgegen der durch den Pfeil 6 gekennzeichneten Hauptströmungsrichtung verjüngen. Umgekehrt bilden die abströmseitig geschlossenen Filtertaschen F_{g ab} die anströmseitig offenen Filtertaschen F_{o an} und die abströmseitig offenen Filtertaschen F_{o ab} die anströmseitig geschlossenen Filtertaschen F_{g an}. Die Filtertaschen F_{o ab}, F_{g ab,} F_{o an}, F_{g an} sind somit jeweils keilförmig verjüngt ausgebildet. Figur 2 zeigt die anströmseitig offenen Filtertaschen F_{o an} und die anströmseitig geschlossenen Filtertaschen F_{g an}. Der zu reinigende Abgasstrom 6 des Dieselmotors tritt in die anströmseitig offenen Filtertaschen F_{o an} ein, durchtritt die die Filtertaschen F_{o an} ausbildenden Wandabschnitte und tritt ein in die abströmseitig offenen Filtertaschen F_{o ab}. In dem Abgasstrom 6 enthaltene Partikel, beispielsweise Rußpartikel lagern sich somit auf den durch die anströmseitig offenen Filtertaschen F_{o an} gebildete Filteroberfläche ab.

Zum Trennen der durch die anströmseitige Oberfläche des Filterkörpers 2 gebildeten Schmutzseite von der durch die abströmseitig offenen Filtertaschen F_{o ab} gebildeten Reinseite dient u.a. die Gehäuseschale 3, die den Filterkörper 2 in seinem oberen Bereich umgibt. Die Gehäuseschale 3 ist im Bereich ihres anströmseitigen Endes gasdicht mit dem oberen Abschluß des Filterkörpers 2 verbunden. Zur weiteren Abdichtung ist die Gehäuseschale 3 entlang eines Dichtfalzes 7 mit dem Filterkörper 2, beispielsweise durch Verschweißen verbunden. Der Dicht- und Montageflansch 4 ist im Bereich der ausströmseitigen Querschnittsfläche 5 des Filterkörpers 2 im Bereich des unteren Abschlusses des Filterkörpers 2 mit diesem gasdicht verbunden. Aus der Darstellung der Figur 2 wird ferner deutlich, dass der in ein Rohr eingesetzte Dieselpartikelfilter nicht nur stirnseitig, wie durch den Pfeil 6 symbolisiert, sondem auch von unten angeströmt werden kann. Zu diesem Zweck ist es vorteilhaft, den Dieselpartikelfilter 1 in eine rohrförmige Aufnahme dergestalt einzusetzen, dass zwischen dem unteren Abschluß des Filterkörpers 2 und der Innenwandung des Rohrkörpers ein ausreichender Abstand zum Gewährleisten einer wirksamen Anströmung der anströmseitig offenen Filtertaschen F_{o an} auch aus radialen Richtungen.

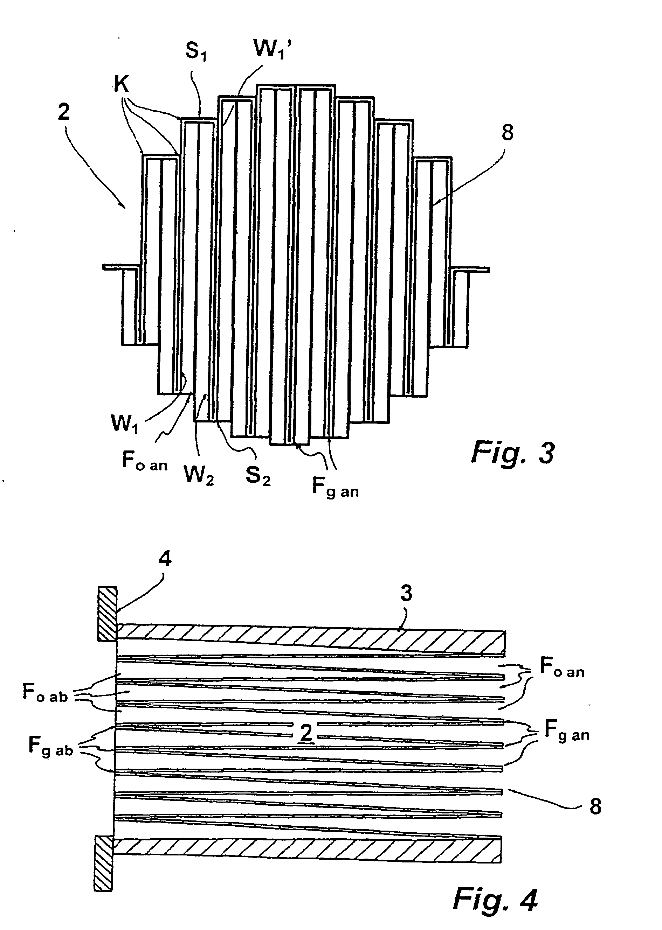

Die in Figur 3 gezeigte Draufsicht auf die anströmseitige Stirnfläche 8 des Filterkörpers 2 verdeutlicht, in weicher Art und Weise der Filterkörper 2 aus einem einzigen Filtermaterialstreifen hergestellt ist. Der Filtermaterialstreifen zum Ausbilden des Filterkörpers 2 wird mäandrierend an vorbestimmten Kantachsen gekantet, die in Figur 3 zum Teil durch die Materialkante K kenntlich gemacht sind. Jede anströmseitig offene Filtertasche F_{o an} ist gebildet aus zwei parallel zueinander verlaufenden Wandabschnitten W₁, W₂, die der Übersicht halber lediglich an einer anströmseitig offenen Filtertasche F_{o an} als solche bezeichnet sind. Die Wandabschnitte W₁, W₂ sind durch einen Seitenwandabschnitt S₁ voneinander getrennt. Der Seitenwandabschnitt S₁ verjüngt sich zum Fuße der anströmseitig offenen Filtertasche F_{o an} hin und weist somit eine dreieckfömige Kontur auf. Zwischen dem Wandabschnitt W₂ und dem daran angrenzenden W₁', der benachbart anströmseitig offenen Filtertasche F_{o an} ist ebenfalls ein Seitenwandabschnitt S₂ angeordnet, dessen Verjüngung genau entgegengesetzt zur Verjüngung des Seitenwandabschnittes S₁ ausgebildet ist. Die anströmseitig und abströmseitig aneinandergrenzenden Wandabschnitte zweier Filtertaschen sind gasdicht im Bereich der jeweiligen Stimfläche 5 bzw. 8 miteinander gefügt. Die Filtertaschen F_{o an}, F_{g an} queren die Querschnittsfläche des Filterkörpers 2 und definieren somit die Querschnittskontur des Filterkörpers 2.

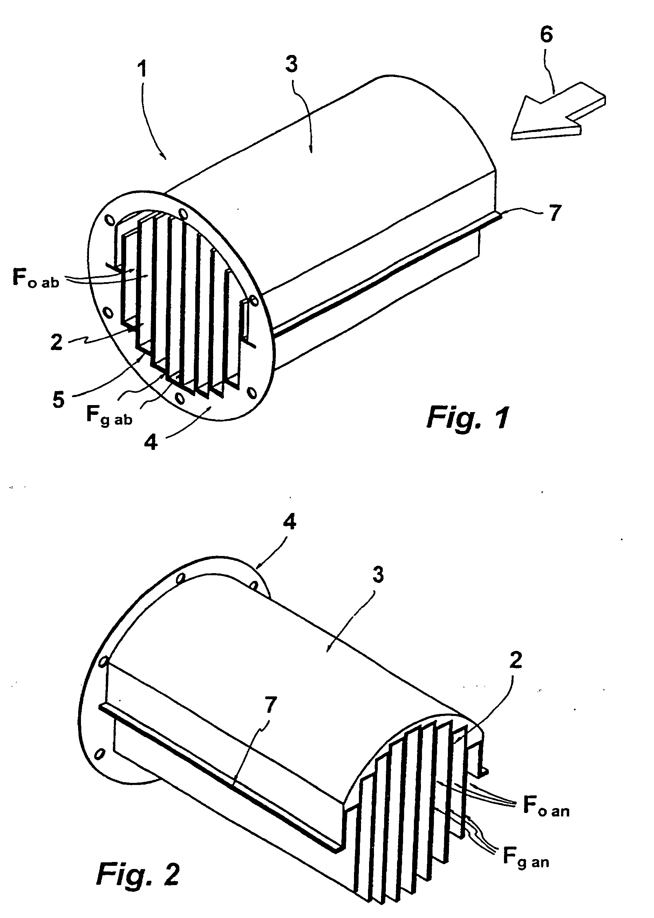

Aus Figur 3 wird ferner deutlich, dass allein durch die Anordnungen der Kantachsen bezüglich ihres Abstandes zueinander ein Filterkörper mit unterschiedlichsten Querschnittsgeometrien ausgebildet werden kann. Ist beispielsweise der Abstand zwischen gleichartigen Kantachsen über die Länge des zur Ausbildung des Filterkörpers eingesetzten Filtermaterialstreifens gleich, ist mit einem solchen Filtermaterialstreifen ein bezüglich seiner Querschnittsfläche rechtwinkliger Filterkörper erstellbar. Bei dem in den Figuren 1 bis 3 gezeigten Filterkörper 2 sind die Abstände zwischen gleichartigen Kantachsen ungleich; dieser Abstand vergrößert sich sukzessive bis zur Mitte des Materialstreifens und nimmt dann entsprechend ab.

Die keilförmig verjüngte Ausbildung der Filtertaschen ist in der Schnittdarstellung der Figur 4 erkennbar. Deutlich wird, dass die anströmseitig offenen Filtertaschen F_{o an} die abströmseitig geschlossenen Filtertaschen F_{g ab} bilden und umgekehrt. Zur Formstabilisierung der Filtertaschen F_{o an}, F_{g an} bzw. F_{o ab}, F_{g ab} sind in den abströmseitig offenen Filtertaschen F_{o ab} Abstandsmittel, beispielsweise durch entsprechend gebogene Blechelemente eingesetzt. Der Übersicht halber sind diese Abstandsmittel in den Figuren nicht dargestellt.

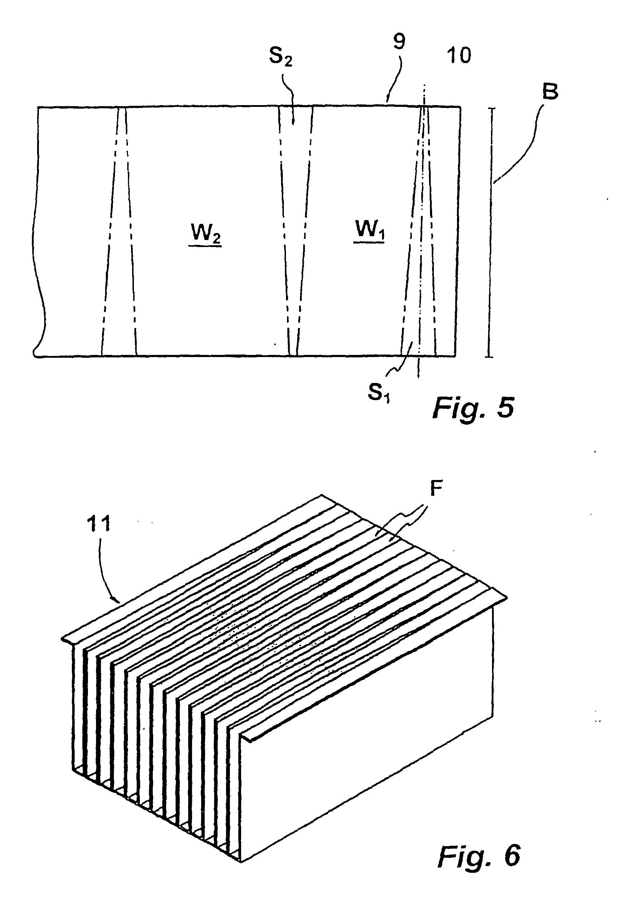

Figur 5 zeigt eine Draufsicht auf einen Abschnitt des Filtermaterialstreifens 9, aus dem der Filterkörper 2 gebildet ist. Die Breite B des Filtermaterialstreifens 9 entspricht der Länge des daraus gebildeten Filterkörpers 2 in Richtung seiner Längserstreckung. Die Länge des Filtermaterialstreifens 9, die in Figur 5 nicht vollständig gezeigt ist, ist abhängig von dem aus dem Filtermaterialstreifen 9 herzustellenden Filterkörper bezüglich seiner Querschnittsfläche und insbesondere auch abhängig von dem Abstand der einzelnen Filtertaschen zueinander und somit deren Anzahl. Die in Figur 5 auf dem Filtermaterialstreifen 9 strichpunktierten Linien sind die Kantachsen, an denen der Filtermaterialstreifen 9 zur Ausbildung des Filterkörpers 2 entsprechend in die eine oder andere Richtung gekantet wird. Die Kantachsen schließen jeweils einen Seitenwandabschnitt S₁, S₂ bzw. einen Wandabschnitt W₁, W₂ ein. Die beiden jeweils einen Seitenwandabschnitt beispielsweise den Seitenwandabschnitt S₁ - einschließenden Kantachsen sind zueinander verjüngt. Somit ist jede Kantachse mit einem geringen Winkel zur Längsachse 10 des zu erstellenden Filterkörpers 2 geneigt. Beide Kantachsen sind mit demselben Neigungswinkel zur Längsachse 10 geneigt, und zwar mit den halben Verjüngungswinkeln des Seitenwandabschnittes S₁. Das den Seitenwandabschnitt S₂ einschließende Kantachsenpaar ist entsprechend in die entgegengesetzte Richtung hin geneigt.

Zur Ausbildung der in Figur 3 gezeigten Querschnittsfläche ist der Abstand der Seitenwandabschnitte S₁, S₂ ungleich, um auf diese Weise die ausgehend von dem Rand des im Querschnitt etwa kreisrunden Filterkörpers 2 zunehmend breitere und anschließend schmaler werdende Filtertaschenausbildung realisieren zu können.

Figur 6 zeigt einen weiteren Filterkörper 11, der aus einem einzigen Materialstreifen gekantet ist und der im Gegensatz zu dem Filterkörper 2 eine rechteckige Filterquerschnittsfläche aufweist. In der Darstellung des Filterkörpers 11 in Figur 6 ist ferner die wechselseitig offene und geschlossene Anordnung der keilförmigen Filtertaschen F erkennbar.

Als Filtermaterial dient ein solches, welches sich gut kanten läßt. Ein gut kantbares Material umfaßt beispielsweise einen Träger aus Metall mit Öffnungen, beispielsweise ein Drahtgewebe, in dessen Öffnungen ein sinterfähiges Pulver eingebracht ist und zusammen mit dem Träger einem Sinterprozeß unterworfen ist. Ein solcher Sintermetallfilter ist in Streifen herstellbar, grundsätzlich können zur Ausbildung eines Filterkörpers bzw. zur Bereitstellung eines ausreichend langen Filtermaterialstreifens auch mehrere Streifen miteinander verbunden werden, bevor der Filterkörper gekantet wird.

Aus der Beschreibung der Erfindung wird deutlich, dass ein solcher Filter körper - wie beschrieben - auf sehr einfache Weise unter Einsatz eines einzigen, gegebenenfalls auch aus mehreren Einzelstücken hergestellten Materialstreifens hergestellt werden kann. Zu diesem Zweck bedarf es lediglich eines Kantens des Materialstreifens an den vorgesehenen Kantachsen und anschließendem Fügen der stimseitig wechselweise aneinandergrenzenden Wandabschnitte. Insbesondere lassen sich mit der beschriebenen Methode Filterkörper unterschiedlichster Querschnittsgeometrien realisieren, ohne dass zu diesem Zweck einzelne Filtertaschen unterschiedlicher Geometrie hergestellt, bevorratet und anschließend zur Ausbildung eines Filterkörpers zusammengesetzt und miteinander verbunden werden müßten.

### Bezugszeichenliste

- 1: Dieselpartikelfilter
- 2: Filterkörper
- 3: Gehäuseschale
- 4: Dicht- und Montageflansch
- 5: Filterquerschnittsfläche, ausströmseitig
- 6: Abgasstrom
- 7: Dichtfalz
- 8: Filterquerschnittsfläche, anströmseitig
- 9: Filtermaterialstreifen
- 10: Längsachse
- 11: Filterkörper

- B: Breite
- F, F_{o an}, F_{o ab}: Filtertasche offen
- F_{g an}, F_{g ab}: Filtertasche geschlossen
- K: Kante
- W₁, W₁', W₂: Wandabschnitt
- S₁, S₂: Seitenwandabschnitt

## Patentansprüche

1. Abgaspartikelfilter zum Beseitigen von in dem Abgasstrom einer Brennkraftmaschine, etwa einer Dieselbrennkraftmaschine enthaltenen Partikeln, dessen in einem Gehäuse (3) aufgenommener Filterkörper (2, 11) aus benachbart zueinander angeordneten, anströmseitig offenen und sich in Längserstreckung des Filterkörpers (2, 9) keilförmig verjüngenden Filtertaschen (F_{o an}) gebildet ist, wobei die den Filterkörperquerschnitt (8) querenden Kanten der Wandabschnitte (W₁, W₁', W₂) der Filtertaschen (F_{o an}) parallel zueinander verlaufend angeordnet sind und sich die Öffnung jeder Filtertasche (F_{o an}, F_{g an} bzw. F_{o ab}, F_{g ab}) von einem Rand zum gegenüberliegenden Rand der durch das den Filterkörper (2) umgebende Gehäuse (3) eingeschlossenen Querschnittsfläche (8) erstreckt, **dadurch gekennzeichnet, dass** die Filtertaschen (F_{o an}, F_{g an} bzw. F_{o ab}, F_{g ab}) aus einem einzigen kantbaren Filtermaterialstreifen (9) gebildet sind, dessen Breite der Längserstreckung des Filterkörpers (2, 11) entspricht, wobei jeder die Filterkörperquerschnittsfläche bildende Wandabschnitt (W₁, W₁', W₂) von dem benachbarten parallel zu diesem Wandabschnitt (W₁, W₁', W₂) verlaufenden und mit diesem eine Filtertaschenöffnung einschließenden Wandabschnitt durch einen, sich in Längserstreckung des Filterkörpers (2, 11) verjüngenden, gegenüber dem jeweils angrenzenden Wandabschnitt (W₁, W₁', W₂) abgekanteten Seitenwandabschnitt (S₁, S₂) getrennt ist.

2. Abgaspartikelfilter nach Anspruch 1, **dadurch gekenzeichnet,** dass die zum Erstellen einer Filtertasche (F_{o an,} F_{o ab}) aus dem Filtermaterialstreifen (9) vorgesehen Kantachsen mit dem halben Verjüngungswinkel zur Längsachse (10) des Filterkörpers (2) geneigt verlaufen.

3. Abgaspartikelfilter nach einem der Ansprüche 1 bis 2, **dadurch gekenzeichnet,** dass die Kontur der anströmseitig offenen Filtertaschen (F_{o an}) viereckig, insbesondere rechtwinklig ist.

4. Abgaspartikelfilter nach Anspruch 3, **dadurch gekenzeichnet,** dass die Seitenwandabschnitte (S₁, S₂) eine im wesentlichen dreieckförmige Kontur aufweisen.

5. Abgaspartikelfilter nach einem der Ansprüche 1 bis 4, **dadurch gekenzeichnet,** dass zur Trennung der anströmseitigen Filteroberfläche des Filterkörpers (2) von der abströmseitigen Filteroberfläche die anströmseitige Mantelfläche des Filterkörpers (2) von einer Gehäuseschale (3) gegenüber dem anströmenden Abgasstrom (6) abgedichtet umgegeben und im Bereich der abströmseitigen Stimfläche ein Dichtflansch (4) als Trennwand angeordnet ist.

6. Abgaspartikelfilter nach einem der Ansprüche 3 bis 5, **dadurch gekenzeichnet,** dass als die Filtertaschen (F_{o an}, F_{g an} bzw. F_{o ab}, F_{g ab}) bildendes Filtermaterial ein metallenes, mit Öffnungen versehenes Trägermaterial als Träger für in die Öffnungen eingebrachtetes und an dem Träger gehaltenes Sintermaterial vorgesehen ist.

7. Abgaspartikelfilter nach einem der Ansprüche 1 bis 6, **dadurch gekenzeichnet,** dass der Abstand gleichartiger Kantachsen des Filtermaterialstreifens (9) voneinander zum Realisieren unterschiedlicher Querschnittgeometrien des Filterkörpers (2) ungleich ist.

## Revendications

1. Filtre à particules de gaz d'échappement servant à éliminer les particules contenues dans le flux de gaz d'échappement d'un moteur à combustion interne, par exemple des particules dégagées par un moteur à combustion diesel, dont le corps de filtre (2, 11) placé dans un logement (3) est constitué de poches de filtrage (F_{o an}) voisines, disposées les unes à côté des autres, ouvertes du côté arrivée du flux et se rétrécissant de manière cunéiforme dans le sens de la longueur du corps de filtre (2, 9), les arêtes des tronçons de paroi (W₁, W₁', W₂) des poches de filtrage (Fo an), qui traversent la section (8) du corps de filtre, s'étendant selon une disposition parallèle les uns par rapport aux autres et l'ouverture de chaque poche de filtrage (F_{o an}, F_{g an} ou F_{o ab}, F_{g ab}) s'étendant d'un bord au bord opposé de la superficie de la section (8) enfermée par le logement (3) entourant le corps de filtre (2) **caractérisé en ce que** les poches de filtrage (F_{o an}, F_{g an} ou F_{o ab}, F_{g ab}) sont formées d'une bande (9) unique de matériau de filtrage pliable dont la largeur correspond à l'étendue longitudinale du corps de filtre (2, 11), chaque tronçon de paroi (W₁, W₁', W₂) qui forme la superficie de la section du corps de filtre étant séparé du tronçon de paroi voisin, s'étendant parallèlement à ce tronçon de paroi (W₁, W₁', W₂) et entourant avec celui-ci une ouverture de poche de filtrage par un tronçon latéral (S₁, S₂) de paroi replié par rapport au tronçon de paroi (W₁, W₁', W₂) voisin, qui se rétrécit dans le sens de l'étendue longitudinale du corps de filtre (2, 11).

2. Filtre à particules de gaz d'échappement selon la revendication 1 **caractérisé en ce que** les axes de pliage prévus pour fabriquer une poche de filtrage (F_{o an}, F_{o ab}) à partir d'une bande (9) de matériau de filtrage s'étendent de manière inclinée par rapport à l'axe longitudinal (10) du corps de filtre (2) selon la moitié de l'angle de rétrécissement.

3. Filtre à particules de gaz d'échappement selon l'une des revendications 1 à 2 **caractérisé en ce que** le contour des poches de filtrage (F_{o an}) ouvertes du côté arrivée du flux est de préférence quadrangulaire, notamment rectangulaire.

4. Filtre à particules de gaz d'échappement selon la revendication 3 **caractérisé en ce que** les parois latérales (S₁, S₂) présentent un contour sensiblement triangulaire.

5. Filtre à particules de gaz d'échappement selon l'une des revendications 1 à 4 **caractérisé en ce que**, pour séparer la surface du corps de filtre (2) du côté arrivée du flux de la surface du corps de filtre du côté sortie du flux, la surface d'enveloppe côté arrivée du flux du corps de filtre (2) est entourée de manière étanche par rapport à l'arrivée du flux de gaz d'échappement (6) par une coque de logement (3) et une bride d'étanchéité (4) faisant office de paroi de séparation est mise en place au niveau de la surface frontale, du côté sortie du flux.

6. Filtre à particules de gaz d'échappement selon l'une des revendications 3 à 5 **caractérisé en ce que** le matériau de filtrage formant les poche de filtrage (F_{o an}, F_{g an} ou F_{o ab}, F_{g ab}) est un matériau porteur métallique muni d'ouvertures faisant office de porteur pour le matériau à fritter maintenu sur le porteur et introduit dans les ouvertures.

7. Filtre à particules de gaz d'échappement selon l'une des revendications 1 à 6 **caractérisé en ce que** l'intervalle des axes de pliage du même type de la bande (9) de matériau de filtrage diverge l'un par rapport à l'autre afin de réaliser un corps de filtre (2) avec des sections à géométrie variable.

## Claims

1. Exhaust gas particle filter for removing particles contained in the exhaust gas flow of an internal combustion engine, for instance in a diesel internal combustion engine, the filter body (2, 11) of which, which is received in a housing (3), is formed from filter pockets (F_{o an}) which are disposed adjacent to each other, are open on the inflow side and taper in a wedge-shape in the longitudinal extension of the filter body (2, 9), the folds of the wall portions (W₁, W₁', W₂) of the filter pockets (F_{o an}) which intersect the filter body cross-section (8) being disposed extending parallel to each other and the opening of each filter pocket (F_{o an}, F_{g an} or F_{o ab}, F_{g ab}) extending from one edge to the opposite edge of the cross-sectional face (8) which is enclosed by the housing (3) which surrounds the filter body (2), **characterised in that** the filter pockets (F_{o an}, F_{g an} or F_{o ab}, F_{g ab}) are formed from a single foldable filter material strip (9), the width of which corresponds to the longitudinal extension of the filter body (2, 11), each wall portion (W₁, W₁', W₂) which forms the filter body cross-sectional face being separated from the adjacent wall portion, which extends parallel to this wall portion (W₁, W₁', W₂) and encloses with the latter a filter pocket opening, by a lateral wall portion (S₁, S₂) which tapers in the longitudinal extension of the filter body (2, 11) and is folded relative to the respectively adjacent wall portion (W₁, W₁', W₂).

2. Exhaust gas particle filter according to claim 1, **characterised in that** the fold axes provided to produce a filter pocket (F_{o an}, F_{o ab}) from the filter material strip (9) extend inclined at half the tapering angle relative to the longitudinal axis (10) of the filter body (2).

3. Exhaust gas particle filter according to one of the claims 1 to 2, **characterised in that** the contour of the filter pockets (F_{o an}) which are open on the inflow side is quadrilateral, in particular rectangular.

4. Exhaust gas particle filter according to claim 3, **characterised in that** the lateral wall portions (S₁, S₂) have an essentially triangular contour.

5. Exhaust gas particle filter according to one of the claims 1 to 4, **characterised in that**, in order to separate the filter surface of the filter body (2) on the inflow side from the filter surface on the outflow side, the outer peripheral face of the filter body (2) on the inflow side is surrounded by a housing shell (3), sealed relative to the inflowing exhaust gas flow (6) and, in the region of the end face on the outflow side, a sealing flange (4) is disposed as separating wall.

6. Exhaust gas particle filter according to one of the claims 3 to 5, **characterised in that**, as filter material which forms the filter pockets (F_{o an}, F_{g an} or F_{o ab}, F_{g ab}), a metallic carrier material provided with openings is provided as carrier for sinter material which is introduced into the openings and retained on the carrier.

7. Exhaust gas particle filter according to one of the claims 1 to 6, **characterised in that** the spacing of similar fold axes of the filter material strip (9) are dissimilar to each other in order to produce different cross-sectional geometries of the filter body (2).
